# EUROPÄISCHE PATENTANMELDUNG

(11) **EP 1 526 029 A1**
(43) Veröffentlichungstag der Anmeldung: **27.04.2005**
(21) Anmeldenummer: 04021227.6
(22) Anmeldetag: 07.09.2004
(51) Int. Cl.: B60K 35/00, G01C 21/36

(54) **Anzeigevorrichtung und Anzeigeverfahren für ein Kraftfahrzeug**

(30) Priorität: 22.10.2003 DE 10349542
(71) Anmelder: Volkswagen AG, 38436 Wolfsburg (DE)
(72) Erfinder: Heimermann, Matthias, 38302 Wolfenbüttel (DE); Wengelnik, Heino, Dr., 38442 Wolfsburg (DE); Lilienthal, Jörg, 38518 Gifhorm (DE); Bohrer, Lorenz, 38106 Braunschweig (DE)
(74) Vertreter: Meyer, Enno, Dr.

(57) **Zusammenfassung**

Die Erfindung betrifft eine Anzeigevorrichtung (10) für ein Kraftfahrzeug, die in verschiedene Anzeigemodi (12,14,16,18) mittels einer Bedienvorrichtung umschaltbar und von einem Rechner angesteuert ist, wobei die Anzeigevorrichtung (10) mindestens eine auswählbare Funktion aufweist. Der Rechner und die Anzeigevorrichtung (10) sind derart ausgebildet, dass die mindestens eine auswählbare Funktion in zumindest einem Anzeigemodus als interaktives Objekt (20,22,24,26) in einem durch den Anzeigemodus (12,14,16,18) vorgegebenen Kontext darstellt wird.

## Beschreibung

Die Erfindung betrifft eine Anzeigevorrichtung und ein Anzeigeverfahren für ein Kraftfahrzeug nach dem Oberbegriff von Anspruch 1 bzw. 5.

Variable Instrumentierungen in Kraftfahrzeugen gewinnen mit steigendem Fahrkomfort an Bedeutung. Aus der DE 43 07 367 A1 ist beispielsweise eine Anzeige- und Bedienvorrichtung mit einer Grundinstrumentierung wie einem Tacho und einem Drehzahlmesser und einem einstellbaren Instrument bekannt. Das einstellbare Instrument kann mit der Bedienvorrichtung konfiguriert werden, d.h. ein Kraftfahrzeugführer kann wählen, was das einstellbare Instrument anzeigt.

In der Regel ist die Auswahl bei einstellbaren Instrumenten im Kraftfahrzeug auf einige vorgegebene Menüs und Anzeigmodi beschränkt. Denkbar ist beispielsweise, bestimmte Betriebsmodi des Kraftfahrzeugs oder Informationen eines im Fahrzeug eingebauten Radios anzuzeigen, wie beispielsweise den ausgewählten Radiosender. Die auswählbaren Funktionen eines einstellbaren Instrument sind hierbei in geräteorientierten hierarchischen Strukturen wie beispielsweise Listen abgelegt. Zum Auswählen werden die Funktionen in verschiedenen Menüs angezeigt, die hierarchisch strukturiert sind.

Allerdings wird mit zunehmender Anzahl von Funktionen, insbesondere in teueren Kraftfahrzeugen, der Aufbau der Menüs immer komplexer. So sind beispielsweise Anzeigemodi für Navigationsysteme und verschiedenste Zusatzfunktionen im Kraftfahrzeug mit einer umfangreichen Funktionsauswahl vorgesehen, so daß die Auswahl einzelner Funktionen in diesen Fällen sehr zeitaufwendig sein und einen Fahrer vom Führen des Kraftfahrzeugs ablenken kann.

Das der Erfindung zugrunde liegende technische Problem besteht daher darin, eine Anzeigevorrichtung für ein Kraftfahrzeug und ein entsprechendes Anzeigeverfahren anzugeben, die einen einfacheren Zugang zu auswählbaren Funktionen bietet als die eingangs erläuterten Anzeigevorrichtungen und -verfahren für Kraftfahrzeuge.

Dieses Problem wird durch eine Anzeigevorrichtung für ein Kraftfahrzeug und ein entsprechendes Anzeigeverfahren mit den Merkmalen nach Anspruch 1 bzw. 5 gelöst. Weitergehende Ausgestaltungen der Erfindung ergeben sich aus den abhängigen Ansprüchen.

Der Erfindung liegt die Idee zugrunde, einen neuartigen Funktionszugang bei einer Anzeigevorrichtung dadurch zu ermöglichen, dass Funktionen als interaktive Objekte in beliebigen, vorzugsweise grafischen Kontexten zugänglich gemacht werden. Diese (Funktions-)Objekte können beispielsweise Personen, Gebäude, Termine oder Ereignisse sein, die abhängig von ihrer Art und Dimension in zeitlichen oder räumlichen Kontexten angezeigt und aufgerufen werden können. Personen erscheinen daher nicht mehr ausschließlich in Adressbüchern, sondern auch in Straßenkarten; Termine, Fahrzeitinformationen und Standheizungstimer sind beispielsweise in der Borduhr ablesbar und bedienbar. Mit diesem neuartigen Zugang zu Funktionen erhält ein Kraftfahrzeugführer sämtliche Nutzungsoptionen, beispielsweise navigieren, telefonieren oder verändern von Daten. Die Nutzungsoptionen variieren dabei von Funktion zu Funktion.

Durch die Einbindung in die verschiedenen Anzeigemodi als Objekte erhalten die entsprechenden Funktionen eine wesentliche größere Aussagekraft. Sie stellen sich nicht mehr bloß als aufgelistete technische Funktion dar, sondern als reale Objekte mit räumlichem und zeitlichem Bezug. Die Anzeigemodi ermöglichen dabei nicht nur den Zugang zu den Objekten, sondern geben je nach Anzeigemodus auch Aufschluss über Enfernung, Richtung, Konzentration, Zeitpunkt oder Dauer.

Objekte, die sowohl zeitliche als auch räumliche Bezüge besitzen, können gleichzeitig in mehreren Kontexten vermittelt werden. Neben den grafischen Darstellungen können die Funktionsobjekte auch weiterhin in strukturierten Listen angezeigt werden. Die Strukturen sind dabei variabel und können vom Anwender zum Teil selbst bestimmt werden.

Mit der Veränderung von Ort und Zeit können kontinuierlich neue Objekte in den Anzeige-Fokus gelangen. Das Funktionsangebot kann sich dadurch permanent an die zeitliche oder räumliche Situation anpassen, wodurch der Fahrer im Vergleich zu konventionellen Menüs einen deutlich schnelleren Zugang zu situativ relevanten Funktionen hat.

Die erwähnten Kontexte Raum und Zeit sind nur erste Beispiele, weitere sind für die Zukunft vorstellbar.

Die Erfindung betrifft konkret eine Anzeigevorrichtung für ein Kraftfahrzeug, die in verschiedene Anzeigemodi mittels einer Bedienvorrichtung umschaltbar und von einem Rechner angesteuert ist, wobei die Anzeigevorrichtung mindestens eine auswählbare Funktion aufweist. Der Rechner und die Anzeigevorrichtung sind derart ausgebildet, dass die mindestens eine auswählbare Funktion in zumindest einem Anzeigemodus als interaktives Objekt in einem durch den Anzeigemodus vorgegebenen Kontext dargestellt wird. Vorzugsweise ist das Objekt in einem grafischen Kontext darstellbar.

Das Objekt kann eine Person wie ein Anrufer, ein Gebäude wie eine Sehenswürdigkeit, ein Ort wie ein Navigationsziel, eine Einrichtung wie eine Tankstelle oder ein Hotel, ein Termin und/oder ein Ereignis wie ein Ölwechsel oder Tanken sein.

Insbesondere wird ein Objekt mit zeitlichem und räumlichem Bezug in Anzeigemodi mit zeitlichem und räumlichem Kontext, wie beispielsweise einer Analoguhr oder eine Art Radarschirm, angezeigt.

Ferner betrifft die Erfindung ein Anzeigeverfahren für ein Kraftfahrzeug, bei dem verschiedene Anzeigemodi einer von einem Rechner angesteuerten Anzeigevorrichtung mittels einer Bedienvorrichtung auswählbar sind, wobei mindestens eine auswählbare Funktion vorgesehen ist. Der Rechner erzeugt Signale zum Ansteuern der Anzeigevorrichtung derart, dass die mindestens eine auswählbare Funktion in zumindest einem Anzeigemodus als interaktives Objekt in einem durch den Anzeigemodus vorgegebenen Kontext dargestellt wird. Das Objekt wird vorzugsweise in einem grafischen Kontext dargestellt.

Als Objekt kann eine Person, ein Gebäude, ein Termin und/oder ein Ereignis dargestellt werden. Insbesondere wird ein Objekt mit zeitlichem und räumlichem Bezug in Anzeigemodi mit zeitlichem und räumlichem Kontext angezeigt.

Im folgenden werden bevorzugte Ausführungsformen der Erfindung anhand der Zeichnungen erläutert.
- Fig. 1: zeigt einen ersten Modus einer erfindungsgemäßen Anzeigevorrichtung, und
- Fig. 2: zeigt weitere Anzeigemodi der Anzeigevorrichtung.

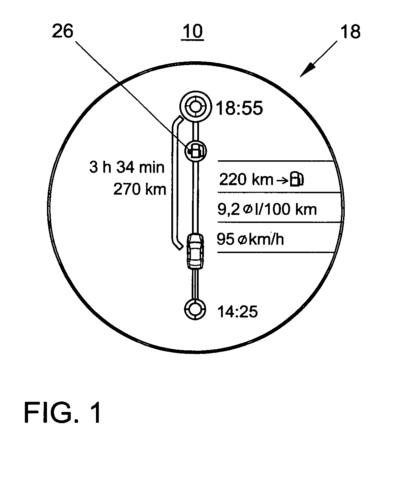

Fig. 1 zeigt eine Anzeigevorrichtung 10, bei welcher der Anzeigemodus "Reisestatistik" eingestellt ist. Die Darstellung wird von einem Rechner wie dem Bord-PC generiert. Die Fahrstrecke wird als Linie dargestellt, auf der sich das Fahrzeug bewegt. Dabei wird in diesem Modus die zurückgelegte Strecke prozentual anzeigt. Auf der Strecke werden Etappenziele als Anzeigeobjekte dargestellt, die mit einer Bedienvorrichtung wie einen Lenkstockhebel mit einem Rollrad selektiert werden können. Zu einem selektierten Objekt wird die Entfernung und voraussichtliche Fahrzeit angezeigt.

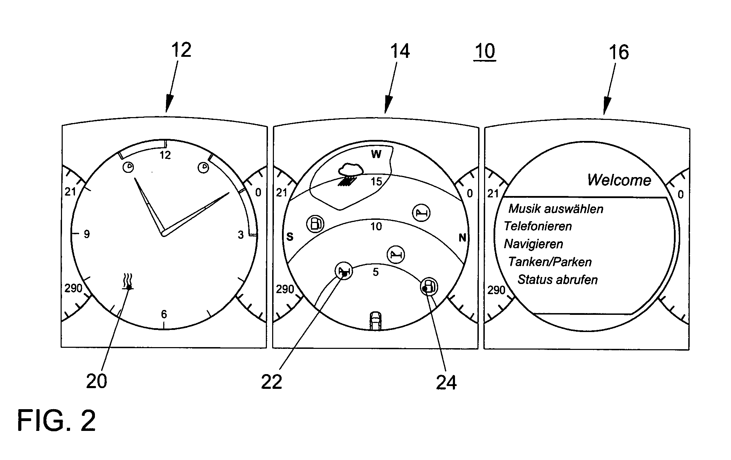

Fig. 2 zeigt weitere Anzeigmodi 12, 14 und 16 der Anzeigevorrichtung 10. In einem Anzeigemodus 12 mit Analoguhr-Darstellung wird ein zeitlicher Kontext gebildet, in dem als interaktives Objekt 20 ein zeitlich relevantes Objekt wie beispielsweise der Startzeitpunkt der Standheizung angezeigt wird. Dieses Objekt 20 kann ausgewählt, d.h. aktiviert werden, um weitere Informationen zur der durch das Objekt 20 vermittelten Information anzuzeigen. Hierzu ermittelt der Bord-PC beispielsweise den Startzeitpunkt und/oder die gewünschte Innentemperatur und zeigt die ermittelten Informationen über entsprechende Steuersignale auf der Anzeigevorrichtung 10 an.

Der mittlere Anzeigemodus 14 in Fig. 2 zeigt einen räumlichen Kontext in der Art eines Radarschirmes, auf dem mehrere interaktive Objekte wie Hotels 22 und Tankstellen 2 dargestellt sind. Durch Auswahl der Objekte 22 und 24 können weitere Daten angezeigt werden, wie beispielsweise der Name eines Hotels, eine Preisliste und bestimmte Angebote oder die Benzinpreise einer Tankstelle.

Schließlich kann im Anzeigemodus 16 der Anzeigevorrichtung 10 Informationen in Form einer Auswahlliste in herkömmlicher Weise dargestellt werden. Dadurch können Funktionsobjekte dargestellt werden, die nur schwer in Kontexte von Anzeigmodi eingeordnet werden können.

### BEZUGSZEICHENLISTE

- 10: Anzeigevorrichtung
- 12: Anzeigemodus mit zeitlichem Kontext
- 14: Anzeigemodus mit räumlichem Kontext
- 16: Anzeigemodus mit Listendarstellung
- 18: Anzeigemodus mit räumlichem Kontext
- 20: Interaktives Objekt mit zeitlichem Bezug (Startzeitpunkt der Standheizung)
- 22: Interaktives Objekt mit örtlichem Bezug (Hotel/Tankstelle)
- 24: Interaktives Objekt mit örtlichem Bezug (Hotel/Tankstelle)

## Patentansprüche

1. Anzeigevorrichtung (10) für ein Kraftfahrzeug, die in verschiedene Anzeigemodi (12, 14, 16, 18) mittels einer Bedienvorrichtung umschaltbar und von einem Rechner angesteuert ist, wobei die Anzeigevorrichtung (10) mindestens eine auswählbare Funktion aufweist, **dadurch gekennzeichnet, dass** der Rechner und die Anzeigevorrichtung derart ausgebildet sind, dass die mindestens eine auswählbare Funktion in zumindest einem Anzeigemodus als interaktives Objekt (20, 22, 24, 26) in einem durch den Anzeigemodus vorgegebenen Kontext darstellt wird.

2. Anzeigevorrichtung nach Anspruch 1, **dadurch gekennzeichnet, dass** das Objekt in einem grafischen Kontext (14, 18) darstellbar ist.

3. Anzeigevorrichtung nach Anspruch 1 oder 2, **dadurch gekennzeichnet, dass** das Objekt eine Person, ein Gebäude, ein Ort, eine Einrichtung (22, 24, 26), ein Termin und/oder ein Ereignis (20) ist.

4. Anzeigevorrichtung nach Anspruch 1, 2 oder 3, **dadurch gekennzeichnet, dass** ein Objekt mit zeitlichem und räumlichem Bezug in Anzeigemodi mit zeitlichem und räumlichem Kontext (12, 14) angezeigt wird.

5. Anzeigeverfahren für ein Kraftfahrzeug, bei dem verschiedene Anzeigemodi einer von einem Rechner angesteuerten Anzeigevorrichtung mittels einer Bedienvorrichtung auswählbar sind, wobei mindestens eine auswählbare Funktion vorgesehen ist, **dadurch gekennzeichnet, dass** der Rechner Signale zum Ansteuern der Anzeigevorrichtung derart erzeugt, dass die mindestens eine auswählbare Funktion in zumindest einem Anzeigemodus als interaktives Objekt in einem durch den Anzeigemodus vorgegebenen Kontext dargestellt wird.

6. Anzeigeverfahren nach Anspruch 5, **dadurch gekennzeichnet, dass** das Objekt in einem grafischen Kontext (14, 18) dargestellt wird.

7. Anzeigevorrichtung nach Anspruch 5 oder 6, **dadurch gekennzeichnet, dass** als Objekt eine Person, ein Gebäude, ein Ort, eine Einrichtung (22, 24, 26), ein Termin und/oder ein Ereignis (20) dargestellt wird.

8. Anzeigevorrichtung nach Anspruch 5, 6 oder 7, **dadurch gekennzeichnet, dass** eine Objekt mit zeitlichem und räumlichem Bezug in Anzeigemodi mit zeitlichem und räumlichem Kontext (12, 14) angezeigt wird.
